# EUROPÄISCHE PATENTANMELDUNG

(11) **EP 1 367 784 A1**
(43) Veröffentlichungstag der Anmeldung: **03.12.2003**
(21) Anmeldenummer: 02011768.5
(22) Anmeldetag: 27.05.2002
(51) Int. Cl.: H04L 12/58, H04M 3/487

(54) **Ereignisgesteuerter Benachrichtigungsdienst**

(71) Anmelder: SIEMENS AKTIENGESELLSCHAFT, 80333 München (DE)
(72) Erfinder: Mitreuter, Ulrich, Dr., 82549 Koenigsdorf (DE); Weyl, Sylvain, 22300 Lannion (FR)

(57) **Zusammenfassung**

Die zugrunde liegende Erfindung beruht auf einem Konzept zur Verwendung einer gemeinsamen (homogenen) Anwendungsprogrammierschnittstelle (106) für Applikationsserver (102a-c) eines Telekommunikationsdienstes, bei der die serverseitigen Anwendungsprogramme (101) die Möglichkeit haben, ereignisgesteuerte Textdaten, Sprachnachrichten und/oder Signalisierungsinformationen beliebigen Typs - z.B. per Short Message Service (108a), Fax (108b), Simple Mail Transfer Protocol (108c), Instant Message (108d), Email Waiting Indication (108e) oder telefonischer Durchsage (108f) - unabhängig von dem jeweils zugrunde liegenden Kommunikationsprotokoll über eine Service-Plattform (104) an die Endgeräte der jeweiligen Kommunikationsteilnehmer zu senden. Da alle Nachrichtentypen (108a-f) über dieselbe Anwendungsprogrammierschnittstelle (106) bereitgestellt werden, können Interaktionen zwischen den einzelnen Nachrichten (108a-f) in der Service-Plattform (104) zentral bearbeitet werden.

Das Versenden der Textdaten, Sprachnachrichten und/oder Signalisierungsinformationen erfolgt dabei automatisch als Reaktion auf ein vorher festgelegtes Ereignis, um den Empfänger über dieses Ereignis zu informieren und/oder die Ausführung einer vorher vom Empfänger festgelegten Transaktion durch eines der Endgeräte (110a-d) des Empfängers auszulösen.

## Beschreibung

Die zugrunde liegende Erfindung beruht auf einem Konzept zur Verwendung einer gemeinsamen (homogenen) Anwendungsprogrammierschnittstelle für Applikationsserver eines Telekommunikationsdienstes, bei der die serverseitigen Anwendungsprogramme die Möglichkeit haben, ereignisgesteuerte Textdaten, Sprachnachrichten und/oder Signalisierungsinformationen beliebigen Typs - z.B. per Short Message Service (SMS), Fax, Simple Mail Transfer Protocol (SMTP), Instant Message (IM), Email Waiting Indication (EWI) oder telefonischer Durchsage - unabhängig von dem jeweils zugrunde liegenden Kommunikationsprotokoll über eine Service-Plattform an die Endgeräte der jeweiligen Kommunikationsteilnehmer zu senden. Als Service-Plattform kommt dabei eine spezielle Serverarchitektur zum Einsatz, die über ein Wide Area Network (WAN) und/oder ein Telefonnetz mit den Endgeräten der Benutzer (Clients) verbunden ist. Da alle Nachrichtentypen über dieselbe Anwendungsprogrammierschnittstelle bereitgestellt werden, können auch Interaktionen zwischen den einzelnen Nachrichten von der Service-Plattform zentral bearbeitet werden.

Im Zuge der immer schneller werdenden Telekommunikations- und Datennetze und der damit verbundenen immer größer werdenden Informationsflut sind Anwender, die dieses Angebot an Informationen nutzen wollen, immer weniger frei und erreichbar. Um die Nutzer bei der Suche nach den für sie relevanten Informationen im Netz zu entlasten, werden heute von vielen Service Providern sogenannte ereignisgesteuerte Benachrichtigungsdienste (engl.: "Event Notification Services", ENS) angeboten, die im Falle eines bestimmten, vorher geeignet festgelegten Ereignisses eine Verbindung von den auf den Applikationsservern des jeweiligen Netzes laufenden Anwendungsprogrammen zu den jeweiligen Nutzern bereitstellen und an diese eine kurze Benachrichtigung über das eingetretene Ereignis übersenden. Darüber hinaus besteht die Möglichkeit, dass das jeweils adressierte Kommunikationsendgerät eines Empfängers nach Erhalt einer solchen Nachricht selbsttätig Transaktionen vornimmt. Handelt es sich bei dem serverseitigen Anwendungsprogramm beispielsweise um eine Bank-Applikation, kann für den betreffenden Anwender individuell vorgesehen werden, dass beispielsweise bei Unter- bzw. Überschreiten vorher vom Anwender geeignet festgelegter Schwellwerte (z.B. für einen bestimmten Aktien- oder Wertpapierkurs) nach Erhalt der Nachricht durch eines seiner Kommunikationsendgeräte automatisch eine vorab festgelegte Transaktion (z.B. das Kaufen oder Verkaufen dieser Aktie bzw. dieses Wertpapiers) ausgeführt wird.

Mit Hilfe konventioneller ereignisgesteuerter Benachrichtigungsdienste, die alle üblicherweise verwendeten Nachrichtenübermittlungsarten umfassen - z.B. per Short Message Service (SMS), Fax, Telefondurchsage, Email Waiting Indication (EWI), Instant Message (IM) oder über das Simple Mail Transfer Protocol (SMTP) - können Nutzer weltweit über ihre Kommunikationsendgeräte (PC mit Internetanschluss, Telefax, Festnetzoder Mobiltelefon) mit den speziell für sie relevanten Informationen versorgt werden.

Nach derzeitigem Stand der Technik müssen Anwendungsprogramme (z.B. Bank-Applikationen, die Aktienkurse überwachen), welche bei Eintreten eines bestimmten Ereignisses (in dem obigen Beispiel für den Fall, dass ein bestimmter Aktienkurs einen vorher geeignet festgelegten Schwellwert unter- bzw. überschreitet) eine Benachrichtigung an das Kommunikationsendgerät des betreffenden Benutzers senden wollen, entweder verschiedene Kommunikationsprotokolle für jeden der oben genannten Nachrichtentypen unterstützen oder verschiedene Anwendungsprogrammierschnittstellen (engl.: "Application Programming Interfaces", APIs) der jeweiligen Service Provider verwenden. In dem einen Fall sind die Entwicklungskosten sehr hoch und in dem anderen Fall benötigt jeder Nachrichtentyp eine eigene Anwendungsprogrammierschnittstelle. Falls ein Nutzer mehrere Nachrichten verschiedenen Typs empfangen will, muss er auf eine Vielzahl verschiedener Anwendungsprogrammierschnittstellen zurückgreifen (heterogene Lösung).

Um die zentrale Idee der zugrunde liegenden Erfindung verstehen zu können, soll im Folgenden kurz auf den im Rahmen der erfindungsgemäßen Lösung als Stand der Technik verwendeten Schnittstellenstandard CAPI eingegangen werden.

Über die Anwendungsprogrammierschnittstelle "Common ISDN Application Programming Interface" (CAPI), eine standardisierte und damit herstellerunabhängige Schnittstelle zwischen den OSI-Schichten 3 und 4 des B-Kanal-Protokolls von ISDN, können die ISDN-Kommunikationsroutinen von Applikationsprogrammen auf die ISDN-Karte eines PCs (unabhängig von der verwendeten Hardwareplattform) zugreifen. Da die Dienste der Schichten 4 bis 7 durch die jeweilige PC-Software erbracht werden, ist die Adapterkarte unabhängig von der gewählten Anwendung. In den letzten Jahren hat sich die CAPI-Schnittstelle als gängigste Schnittstelle für PC-Karten mit ISDN-Schnittstellen herausgestellt und wird heute von fast allen handelsüblichen PC-Karten unterstützt. Über eine CAPI-Schnittstelle können auch mehrere Anwendungen (gesteuert über einen definierten Nachrichtenaustausch) auf die ISDN-Karte zugreifen. Das CAPI bildet dabei nicht nur eine Programmierschnittstelle innerhalb eines Telekommunikationssystems, es stellt auch ein Protokoll für die "End-to-End"-Kommunikation zwischen den beiden Kommunikationspartnern im B-Kanal bereit. Beispielsweise können über dieses Protokoll Sicherungsmaßnahmen bei der Datenübertragung vereinbart werden. Üblicherweise werden dafür High Level Data Link Control (HDLC)-Protokolle nach X.75 und T.90 oder Synchronous Data Link Control (SDLC)-Protokolle verwendet.

### AUFGABE DER VORLIEGENDEN ERFINDUNG

Ausgehend von dem oben genannten Stand der Technik, widmet sich die vorliegende Erfindung der Aufgabe, eine Technik bereitzustellen, mit deren Hilfe die auf Applikationsservern laufenden Anwendungsprogramme von Telekommunikationsdiensten die Möglichkeit haben, ereignisgesteuerte Textdaten, Sprachnachrichten und/oder Signalisierungsinformationen beliebigen Typs unabhängig von dem der jeweils gesendeten Nachricht zugrunde liegenden Kommunikationsprotokoll über eine Service-Plattform an die Endgeräte der jeweiligen Kommunikationsteilnehmer zu senden.

Diese Aufgabe wird erfindungsgemäß durch die Merkmale der unabhängigen Patentansprüche gelöst. Vorteilhafte Ausführungsbeispiele, die den Gedanken der Erfindung weiterbilden, sind in den abhängigen Patentansprüchen definiert.

### ZUSAMMENFASSENDE DARSTELLUNG DER VORLIEGENDEN ERFINDUNG

Im Rahmen der erfindungsgemäßen Lösung ist - entsprechend der im vorangehenden Abschnitt definierten Aufgabe - ein Konzept zur Verwendung einer einheitlichen gemeinsamen Anwendungsprogrammierschnittstelle (engl.: "Common Application Programming Interface", CAPI) für alle heute im Bereich der geschäftlichen und privaten Kommunikation verwendeten Nachrichtenübertragungsarten vorgesehen.

Bei Verwendung des erfindungsgemäßen Konzepts können Anwender Textdaten, Sprachnachrichten und/oder Signalisierungsinformationen beliebigen Typs - z.B. mittels Short Message Service (SMS), Fax, Telefondurchsage, Email Waiting Indication (EWI), Instant Message (IM) oder das Simple Mail Transfer Protocol (SMTP) - empfangen, indem sie (unabhängig von dem der jeweils gesendeten Nachricht zugrunde liegenden Kommunikationsprotokoll) die gleiche Anwendungsprogrammierschnittstelle benutzen. Aufgrund dieses einheitlichen Schnittstellenkonzepts (homogene Lösung) können die serverseitigen Anwendungsprogramme, die für die Detektion und Filterung der für den jeweiligen Anwender relevanten Ereignisse zuständig sind, über eine Service-Plattform die oben genannten Textdaten, Sprachnachrichten und/oder Signalisierungsinformationen an die betreffenden Kommunikationsendgeräte der jeweiligen Nutzer versenden.

Die erfindungsgemäße Schnittstelle kann leicht in bereits bestehende oder neue Anwendungen integriert werden. Folglich ist das Anwendungsprogramm des Benutzers in der Lage, das Senden einer ereignisgesteuerten Benachrichtigung für einen Empfänger an die Service-Plattform zu delegieren. Als Service-Plattform kommt hierbei eine Serverarchitektur zum Einsatz, die über ein Wide Area Network (WAN) - in der Regel das Internet - und/oder ein Telefonnetz mit den Endgeräten der Benutzer (Clients) verbunden ist. Da alle Nachrichtentypen durch dieselbe Anwendungsprogrammierschnittstelle bereitgestellt werden, können Interaktionen zwischen mehreren Nachrichten verschiedenen Typs in der Service-Plattform zentral bearbeitet werden. Eine solche Interaktion kann z.B. ein automatisches Umschalten zwischen verschiedenen Nachrichtentypen nach Verstreichen einer vorgebbaren Wartezeit beinhalten. Falls beispielsweise der Empfänger einer ereignisgesteuerten Benachrichtigung per Telefon nicht erreicht werden kann, kann nach Abwarten einer bestimmten Anzahl von Rufzeichen automatisch eine E-Mail und/oder SMS an ihn/sie geschickt werden.

### KURZBESCHREIBUNG DER ZEICHNUNGEN

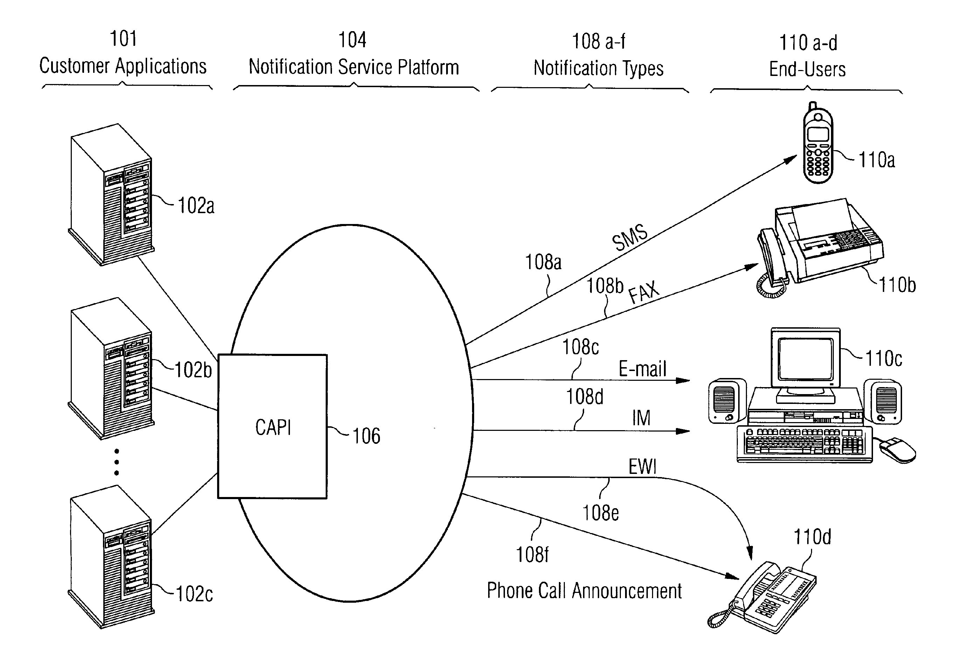

Weitere Eigenschaften, Merkmale, Vorteile und Anwendungen der zugrunde liegenden Erfindung resultieren aus den untergeordneten abhängigen Patentansprüchen sowie aus der folgenden Beschreibung eines Ausführungsbeispiels der Erfindung, welches in Fig. 1 abgebildet ist. Dabei zeigt
- Fig. 1: ein Übersichtsdiagramm zur Veranschaulichung des Schnittstellenkonzepts der Client/Server-Systemarchitektur nach einem Ausführungsbeispiel der zugrunde liegenden Erfindung.

### DETAILLIERTE BESCHREIBUNG DER ERFINDUNG

Im Folgenden soll die erfindungsgemäße Lösung anhand des in Fig. 1 abgebildeten Ausführungsbeispiels näher erläutert werden. Die Bedeutung der mit Bezugszeichen versehenen Symbole in Fig. 1 kann der beigefügten Bezugszeichenliste entnommen werden.

Fig. 1 zeigt ein Übersichtsdiagramm 100 zur Veranschaulichung der Client-Server-Systemarchitektur nach einem Ausführungsbeispiel der zugrunde liegenden Erfindung, bei der die auf den Applikationsservern 102a-c laufenden Kundenanwendungsprogramme 101 über eine gemeinsame Anwendungsprogrammierschnittstelle 106 mit den jeweiligen Endgeräten 110a-d der Benutzer verbunden sind. Eine naheliegende Anwendung des erfindungsgemäßen Konzepts besteht in kundenspezifischen Anwendungsprogrammen 101, die eine einheitliche gemeinsame Anwendungsprogrammierschnittstelle 106 für die im Bereich der geschäftlichen und privaten Kommunikation vorherrschenden Nachrichtenübertragungsarten 108a-f verwenden können, wie beispielsweise
- Bank-Applikationen, die z.B. eine Nachricht 108a-f an eines der Kommunikationsendgeräte 110a-d des betreffenden Nutzers versenden und/oder die Ausführung einer vorher vom Empfänger festgelegten Transaktion (z.B. Kaufen bzw. Verkaufen bestimmter Aktien oder Wertpapiere) durch eines seiner Kommunikationsendgeräte 110a-d auslösen, wenn der Kurs der betreffenden Aktie bzw. des betreffenden Wertpapiers einen vorher geeignet festgelegten Schwellwert unter- bzw. überschreitet,
- Multimedia-Applikationen, die z.B. die in Abwesenheit eines Empfängers eintreffenden E-Mails 108c nach Umwandlung automatisch als telefonische Durchsage 108f, SMS 108a, Fax 108b etc. an das betreffende Kommunikationsendgerät 110d, 110a bzw. 110b des Nutzers senden,
- Applikationen, die z.B. aktuelle Meldungen, Informationen und Tagesberichterstattungen über politische Themen und Ereignisse aus aller Welt, Finanz- oder Börsenberichte präsentieren oder
- Applikationen, die eine Überwachung einer bestimmten Anwender-Plattform vornehmen und bei Detektion eines technischen Problems automatisch einen Wartungsservice benachrichtigen.

Im Folgenden soll kurz auf die wesentlichen Funktionen eingegangen werden, welche von der erfindungsgemäßen Anwendungsprogrammierschnittstelle 106 bereitgestellt werden:
- Senden eines Fax 108b: Das betreffende Anwendungsprogramm 101 ist in der Lage, bei Eintreten eines vorab festgelegten Ereignisses selbsttätig eine Fax-Sitzung 108b mit dem Faxgerät 110b des adressierten Anwenders anzufordern. Eine durch das Fax 108b übermittelte Nachricht wird dabei vom Anwendungsprogramm 101 als Microsoft Word- oder Microsoft Powerpoint-Datei bereitgestellt. Während der Datenübermittlung wird das Anwendungsprogramm 101 laufend über den aktuellen Status der Fax-Datenübermittlung 108b (Verbindungszustand, Anzahl der erfolgreich übermittelten Seiten, Ende der Übertragung) informiert. Die Aufgabe des Anwendungsprogramms 101 ist es, die für einen Anwender relevanten Ereignisse zu erfassen und bei Eintreten eines solchen Ereignisses die Faxnummer des zu benachrichtigenden Empfängers, den Dateinamen der zu übermittelnden Nachricht und die Adresse des Dateiservers, in dem die zu sendende Datei gespeichert ist, bereitzustellen.
- Senden einer Kurznachricht 108a per SMS: Das betreffende Anwendungsprogramm 101 ist in der Lage, bei Eintreten eines vorab festgelegten Ereignisses selbsttätig das Senden einer Kurznachricht 108a per SMS an das Mobiltelefon 110a des zu benachrichtigenden Anwenders zu veranlassen. Da eine solche Kurznachricht auf eine Länge von maximal 160 alphanumerischen Zeichen bzw. auf eine Größe von 140 Byte beschränkt ist, kann der Text einer Kurznachricht 108a via SMS innerhalb des Speicherbereichs der Anwendungsprogrammierschnittstelle 106 gespeichert werden. Nach Erfassung eines eingetretenen Ereignisses muss das Anwendungsprogramm 101 den Text der Kurznachricht 108a und die Rufnummer des Mobiltelefons 110a des zu benachrichtigenden Empfängers bereitstellen.
- Senden einer telefonischen Durchsage: Das betreffende Anwendungsprogramm 101 ist in der Lage, bei Eintreten eines vorab festgelegten Ereignisses selbsttätig einen Verbindungsaufbau zwischen einem Auskunftssystem und dem Festnetztelefon 110d bzw. Mobiltelefon 110a des betreffenden Anwenders zu veranlassen. Nach Erfassung eines eingetretenen Ereignisses muss das Anwendungsprogramm 101 die Rufnummer des Auskunftssystems sowie die Rufnummer des Festnetztelefons 110d bzw. Mobiltelefons 110a des betreffenden Anwenders bereitstellen. Das Auskunftssystem verfügt über einen Datenspeicher, in dem aufgezeichnete Sprachnachrichten, die bei Eintreten vorab festgelegter Ereignisse gesendet werden sollen, gespeichert sind. Eine Alternative zu Auskunftssystemen bieten sogenannte "Text-to-Speech"-Systeme (TTS), die eine Konvertierung von Textdateien in synthetisch generierte Sprachnachrichten vornehmen. Diese Textdateien können dabei in Dateiservern oder innerhalb des Speicherbereichs der Anwendungsprogrammierschnittstelle 106 gespeichert sein. In diesem Fall ist es die Aufgabe des Anwendungsprogramms 101, die für einen Anwender relevanten Ereignisse zu erfassen und bei Eintreten eines solchen Ereignisses die Rufnummer des Festnetztelefons 110d bzw. Mobiltelefons 110a des zu benachrichtigenden Anwenders, den Dateinamen der zu übermittelnden Nachricht und die Adresse des Dateiservers, in dem die zu sendende Datei gespeichert ist, bereitzustellen.
- Senden einer EWI: Das betreffende Anwendungsprogramm 101 ist in der Lage, bei Eintreten eines vorab festgelegten Ereignisses selbsttätig das Senden einer Email Waiting Indication 108e (EWI) an das ISDN-Festnetztelefon 110d des Empfängers zu veranlassen, wenn eine E-Mail empfangen wurde.
   Das EWI 108e kann beispielsweise eine Anzeige auf dem Display des ISDN-Telefons 110d oder eine gesprochene Telefondurchsage sein. Die Art der Mitteilung (per Display oder per Ansage) kann hierbei von jedem Nutzer individuell festgelegt werden.
- Senden einer E-Mail: Das betreffende Anwendungsprogramm 101 ist in der Lage, bei Eintreten eines vorab festgelegten Ereignisses selbsttätig das Senden einer E-Mail 108c an die E-Mail-Adresse eines bestimmten Empfängers zu veranlassen. Da die Größe einer solchen E-Mail 108c begrenzt ist, kann sie innerhalb des Speicherbereichs der Anwendungsprogrammierschnittstelle 106 gespeichert werden. Nach Erfassung eines eingetretenen Ereignisses muss das Anwendungsprogramm 101 den Text der E-Mail 108c und die E-Mail-Adresse des zu benachrichtigenden Empfängers bereitstellen.
- Senden einer IM: Das betreffende Anwendungsprogramm 101 ist in der Lage, bei Eintreten eines vorab festgelegten Ereignisses selbsttätig das Senden einer Instant Message 108d (IM) an den Internet-PC 110c eines bestimmten Empfängers zu veranlassen. Nach Erfassung eines eingetretenen Ereignisses muss das Anwendungsprogramm 101 den Text der IM 108d, den Namen des durch die IM 108d zu benachrichtigenden Empfängers und die verwendete IM-Applikation (AIM, Yahoo Messenger, ICQ etc.) bereitstellen.

Neben der Eröffnung eines einheitlichen gemeinsamen Schnittstellenkonzepts für die oben beschriebenen Nachrichtentypen 108a-f und der Möglichkeit einer zentralen Bearbeitung von Interaktionen zwischen einzelnen Nachrichten verschiedenen Typs durch die Service-Plattform 104 bestehen die Vorteile der oben beschriebenen erfindungsgemäßen Lösung insbesondere
- in der Möglichkeit der einfachen und kostengünstigen Implementierung des erfindungsgemäßen Schnittstellenkonzepts in bereits bestehende Client/Server-Applikationen und der Nutzung vorhandener Nachrichtenübertragungskanäle ohne die Notwendigkeit einer Implementierung von SMTP-, IM- oder SMS-Protokollen,
- in der Möglichkeit, das Senden der ereignisgesteuerten Benachrichtigungen 108a-f an die Service-Plattform 104 zu delegieren,
- in der Tatsache, dass dieselben Prozeduren zur Kontrolle der Authentifikation und Autorisierung der Nutzer sowie der zwischen dem Service Provider und dem jeweiligen Kunden ausgehandelten Leistungsvereinbarungen über die zu erbringenden Telekommunikationsdienstleistungen (engl.: "Service Level Agreements", SLAs) für alle oben genannten Nachrichtentypen 108a-f verwendbar sind, und
- in der Möglichkeit, den Datenverkehr zwischen den serverseitigen Anwendungsprogrammen 101 und den Kommunikationsendgeräten 110a-d der jeweiligen Anwender zu reduzieren, indem die von den Anwendungsprogrammen 101 gesendeten Nachrichten eines vorgegebenen Datenformats (Typ #1) in das Datenformat anderer Nachrichtentypen (Typ #2, Typ #3 usw.) umgewandelt und an die Kommunikationsendgeräte der betreffenden Empfänger gesendet werden.

### Bezugszeichenliste

| Nr. | Merkmal |
|---|---|
| 100 | Übersichtsdiagramm zur Veranschaulichung des Schnittstellenkonzepts der Client/Server-Systemarchitektur nach einem Ausführungsbeispiel der zugrunde liegenden Erfindung |
| 101 | Anwendungsprogramme mindestens eines für Telekommunikationsdienste zuständigen Applikationsservers 102a/b/c eines Service-Providers |
| 102a | erster Applikationsserver eines Service-Providers, auf dem die für die gewünschten Telekommunikationsdienste benötigten Anwendungsprogramme 101 laufen |
| 102b | zweiter Applikationsserver eines Service-Providers, auf dem die für die gewünschten Telekommunikationsdienste benötigten Anwendungsprogramme 101 laufen |
| 102c | n-ter Applikationsserver eines Service-Providers, auf dem die für die gewünschten Telekommunikationsdienste benötigten Anwendungsprogramme 101 laufen |
| 104 | Service-Plattform des betreffenden Service-Providers |
| 106 | Anwendungsprogrammierschnittstelle der Service-Plattform 104 zu den Applikationsservern 102a-c |
| 108a | Nachrichtentyp #1: Textdatenübertragung per Short Message Service (SMS) |
| 108b | Nachrichtentyp #2: Textdatenübertragung per Telefax |
| 108c | Nachrichtentyp #3: Textdatenübertragung per E-Mail |
| 108d | Nachrichtentyp #4: Textdatenübertragung per Instant Message (IM) |
| 108e | Nachrichtentyp #5: Signalisierung per Email Waiting. Indication (EWI) |
| 108f | Nachrichtentyp #6: Sprachnachrichtenübertragung per Telefondurchsage |
| 110a | Kommunikationsendgerät #1: SMS-fähiges Mobiltelefon |
| 110b | Kommunikationsendgerät #2: Telefax |
| 110c | Kommunikationsendgerät #3: PC mit ISDN-Anschluss |
| 110d | Kommunikationsendgerät #3: ISDN-Festnetztelefon |

## Patentansprüche

1. Verfahren zum Versenden von Textdaten, Sprachnachrichten und/oder Signalisierungsinformationen, die von Anwendungsprogrammen (101) mindestens eines für Telekommunikationsdienste zuständigen Applikationsservers (102a-c) eines Service Providers bereitgestellt und dann über die Anwendungsprogrammierschnittstelle (106) einer Service-Plattform (104) über mindestens ein Telekommunikationsnetz an mindestens ein Kommunikationsendgerät (110a-d) mindestens eines Empfängers versendet werden,
**dadurch gekennzeichnet, dass**
das Versenden dieser Textdaten, Sprachnachrichten und/oder Signalisierungsinformationen über eine Anwendungsprogrammierschnittstelle (106) mit einheitlichem Schnittstellenkonzept für beliebige Nachrichtentypen (108a-f) erfolgt, wobei die von den Anwendungsprogrammen (101) der Applikationsserver (102a-c) gesendeten Nachrichten eines vorgegebenen Datenformats innerhalb der Service-Plattform (104) in das Datenformat anderer Nachrichtentypen (108a-f) umgewandelt und an die Kommunikationsendgeräte (110a-d) der adressierten Empfänger gesendet werden.

2. Verfahren nach Anspruch 1,
**dadurch gekennzeichnet, dass**
das Versenden der Textdaten, Sprachnachrichten und/oder Signalisierungsinformationen automatisch als Reaktion auf ein vorher festgelegtes Ereignis erfolgt, um den Empfänger über dieses Ereignis zu informieren und/oder die Ausführung einer vorher vom Empfänger festgelegten Transaktion durch eines der Kommunikationsendgeräte (110a-d) des Empfängers auszulösen.

3. Verfahren nach einem der Ansprüche 1 und 2,
**dadurch gekennzeichnet, dass**
das Versenden der Textdaten, Sprachnachrichten und/oder Signalisierungsinformationen von den betreffenden Applikationsservern (102a-c) an die Service-Plattform (104) delegiert werden kann.

4. Verfahren nach einem der Ansprüche 1 bis 3,
**dadurch gekennzeichnet, dass**
es sich bei den ereignisgesteuerte Textdaten, Sprachnachrichten und/oder Signalisierungsinformationen um Mitteilungen per Short Message Service (108a), Fax (108b), Simple Mail Transfer Protocol (108c), Instant Message (108d), Email Waiting Indication (108e) oder um telefonische Durchsagen (108f) handelt.

5. Verfahren nach einem der Ansprüche 1 bis 4,
**dadurch gekennzeichnet, dass**
Interaktionen zwischen den einzelnen Nachrichten (108a-f) in der Service-Plattform (104) zentral bearbeitet werden können.

6. Verfahren nach einem der Ansprüche 1 bis 5,
**dadurch gekennzeichnet, dass**
die Übertragung der Nachrichten (108a-f) zwischen dem Applikationsserver (102a-c) des Service Providers und den Kommunikationsendgeräten (110a-d) der Anwender über das Telekommunikationsnetz durch ein standardisiertes Protokoll geregelt ist, das vor dem Versand der Nachrichten (108a-f) eine Verschlüsselung gemäß international festgelegter Sicherheitsrichtlinien vornimmt, um einen Schutz dieser Nachrichten (108a-f) gegen Abhören und unbefugte Zugriffe Dritter zu gewährleisten.

7. Verfahren nach einem der Ansprüche 1 bis 6,
**dadurch gekennzeichnet, dass**
es sich bei mindestens einem der an einer Kommunikationsverbindung zwischen dem Applikationsserver (102a-c) des Service Providers und den Kommunikationsendgeräten (110a-d) der jeweiligen Anwender beteiligten Telekommunikationsnetze um das Internet und/oder ein firmen- bzw. organisationsinternes Intranet handelt.

8. Verfahren nach einem der Ansprüche 1 bis 7,
**dadurch gekennzeichnet, dass**
es sich bei mindestens einem der an einer Kommunikationsverbindung zwischen dem Applikationsserver (102a-c) des Service Providers und den Kommunikationsendgeräten (110a-d) der jeweiligen Anwender beteiligten Telekommunikationsnetze um das öffentliche Telefonnetz (PSTN) und/oder ein Mobilnetz handelt.

9. Verfahren nach Anspruch 8,
**dadurch gekennzeichnet, dass** als Kanal-Signalisierungsstandard für telefonische Benachrichtigungen (108f) über das öffentliche Telefonnetz (PSTN) das Signalisierungssystem 7 (SS#7) eingesetzt wird.

10. Verfahren nach Anspruch 7,
**dadurch gekennzeichnet, dass**
es sich bei den an der jeweiligen Kommunikationsverbindung (108c-e) beteiligten Endgeräten um PCs (110c) handelt, die über eine E-Mail-Applikation und einen ISDN-Zugang zum Internet verfügen.

11. Verfahren nach einem der Ansprüche 8 und 9,
**dadurch gekennzeichnet, dass**
es sich bei den an der jeweiligen Kommunikationsverbindung beteiligten Endgeräten um ISDN-Festnetztelefone (110d), SMSfähige Mobiltelefone (110a) oder Telefaxgeräte (110b) handelt.

12. Anwendungsprogrammierschnittstelle einer Service-Plattform (104) für mindestens einen für Telekommunikationsdienste zuständigen Applikationsserver (102a-c) eines Service Providers,
**gekennzeichnet durch**
die Durchführung eines Verfahrens nach einem der Ansprüche 1 bis 11.

13. Softwaremodul zum Betrieb einer Anwendungsprogrammierschnittstelle (106) für eine Service-Plattform (104) nach Anspruch 12,
**dadurch gekennzeichnet, dass**
ein Verfahren nach einem der Ansprüche 1 bis 11 durchgeführt werden kann.

14. Service-Plattform eines Service Providers zur Steuerung mindestens eines für Telekommunikationsdienste zuständigen Applikationsservers (102a-c),
**gekennzeichnet durch**
eine Anwendungsprogrammierschnittstelle (106) nach Anspruch 12 und ein Softwaremodul zum Betrieb der Anwendungsprogrammierschnittstelle (106) nach Anspruch 13.
